# EUROPÄISCHE PATENTSCHRIFT

(11) **EP 2 618 110 B1**
(45) Veröffentlichungstag und Bekanntmachung des Hinweises auf die Patenterteilung: **12.11.2014**
(21) Anmeldenummer: 12000345.4
(22) Anmeldetag: 20.01.2012
(51) Int. Cl.: G08G 5/00, G08G 5/02, G01C 23/00

(54) **Verfahren und System zur Landehilfe für Helikopter**
Method and system for helping helicopters to land
Procédé et système d'aide à l'atterrissage pour hélicoptère

(43) Veröffentlichungstag der Anmeldung: 24.07.2013
(73) Patentinhaber: Airbus Defence and Space GmbH, 85521 Ottobrunn (DE)
(72) Erfinder: Franke, Andre, 88090 Immenstadt (DE); Vögele, Ulrich, 88046 Friedrichshafen (DE); Saar, Sebastian, 88690 Uhldingen (DE)
(74) Vertreter: Meel, Thomas

(56) Entgegenhaltungen:
- EP-A2- 1 906 151
- US-A1- 2005 206 533
- US-A1- 2012 004 793

## Beschreibung

Die Erfindung betrifft ein Verfahren sowie ein entsprechendes System zur Landehilfe für Helikopter.

Bei Landungen von Helikoptern bei schlechter Sicht (z.B. Landungen bei Nacht, im Schnee, auf Sand) kann es zum Verlust der visuellen Referenz und in deren Folge zu schweren Unfällen kommen (sogenannter Brown-Out oder White-Out).

Allgemein bekannte Ansätze zur Verbesserung der Sicherheit bei Landungen von Helikoptern sind:
- Prozedurale Maßnahmen: Anwendung von Landeverfahren/-Prozeduren ohne spezielle Systeme zur Landeunterstützung. Die Landungen unter schlechten Sichtbedingungen finden nach vorgegebenen Lande-Prozeduren statt (insbesondere unter Vorgabe der Landetrajektorie, Anflugwinkel, Geschwindigkeit, etc). Hierbei stehen Piloten lediglich Lage-Informationen des Helikopters über Cockpit-Instrumente (hier ist insbesondere das Primary Flight System von Bedeutung) zur Verfügung. Information zur genauen Position, Lage und Beschaffenheit der Landefläche sind dagegen nicht verfügbar. Deshalb erfolgt in Einzelfällen die Einweisung des Piloten (z.B. über Sprechfunk) durch Crew-Mitglieder, die visuellen Kontakt zur Landefläche bzw. zum Helikopter haben. Dieser Ansatz wird beispielsweise von deutschen CH53 Besatzungen angewandt.
- Systeme zur unterstützenden Landung (Landehilfe): Verwendung von spezieller Lande-Sensorik und -Visualisierung. Zur verbesserten Orientierung wird Piloten auf Basis entsprechender Sensoren (Lande-Zonen-Radar, Kamera, Präzisions-Höhenmesser, etc.) über Cockpit-Anzeigen (z.B. Multifunktionsdisplay, Head-up Display, Helmet Mounted Display) die Landezone sowie die Lage und Bewegung des Helikopters dargestellt. Die besagten Systeme zur unterstützenden Landung verwenden unterschiedliche Sensoren oder Datenbanken, um daraus Informationen über die Lage, Position und Beschaffenheit der Landezone zu ermitteln und diese in intuitiver Form den Piloten anzuzeigen. Je nach Ausbaustufe findet eine einfache 2D Lande-Symbolik mit Informationen zur Drift und Lage des Helikopters bis hin zu einer synthetischen Außensicht der Lande-Zone Anwendung. Aufgrund zusätzlicher Sensorik und teilweise aufwändiger Verfahren, wie z.B. Datenfusion, ergeben sich allerdings auch Nachteile. Dazu zählen die hohen System- und Integrationskosten, zusätzliches Gewicht, Kritikalität im Hinblick auf Systemverfügbarkeit/ Zuverlässigkeit/Zulassung und nicht zuletzt die Beschränkung des Einsatzes/Nutzens dieser komplexen Lösungen auf die Landephase.
- Systeme zur autonomen Landung: Unter Verwendung spezieller Lande-Sensorik und des Helikopter-Autopiloten werden Landungen automatisch durchgeführt. Für diese Systeme gelten die oben zu den Systemen zur unterstützenden Landung genannten Nachteile ebenfalls, wenngleich die Systemkritikalität und -Zulassung sowie der damit verbundene Aufwand eine noch größere Herausforderung darstellen.

Die Patentanmeldung EP1906151 offenbart ein Verfahren zur Landehilfe für einen Helikopter entsprechend dem Oberbegriff des Anspruchs 1, wobei auf einer Anzeige ein Symbol für die Position einer Landezone sowie relativ hierzu ein Symbol der momentanen Position des Helikopters dargestellt werden. Die Patentanmeldungen US2012/0004793 und US2005/0206533 offenbaren eine separate Höhenanzeige für die Höhenwerte der momentanen Position des Helikopters, bzw. eine kreisförmige Darstellung der Höhenwerte der Landetrajektorie um einen zukünftigen Landepunkt.

Es ist Aufgabe der Erfindung, ein Verfahren zur Landehilfe zu schaffen, das durch die Nutzung der vorhandenen Avionik-Infrastruktur kostengünstig realisiert werden kann und das einfach, intuitiv und übersichtlich gestaltet ist.

Diese Aufgabe wird durch das Verfahren nach Anspruch 1 gelöst. Ein System zur Implementierung des erfindungsgemäßen Verfahrens sowie vorteilhafte Ausführungen sind Gegenstand von weiteren Ansprüchen.

Der erfindungsgemäße Ansatz stellt eine Kombination aus den oben beschriebenen Konzepten "Prozedurale Maßnahmen" und "Systemen zur unterstützenden Landung" dar. Dabei können vorhandene Navigationssysteme (z.B. Inertial-Navigationssystem, Höhensensor) in Verbindung mit vorgegebenen Landeprozeduren (welche neben Geschwindigkeiten, Anflugwinkel, etc. eine bestimmte Landetrajektorie implizieren) genutzt werden, um Piloten über Anzeigen (z.B. Multifunktionsdisplay, Head-up Display, Helmet Mounted Display) eine Orientierungshilfe bei Landungen zu geben. Zur Realisierung des erfindungsgemäßen Verfahrens ist somit im Idealfall nur eine Software-Erweiterung notwendig.

Gemäß der Erfindung erfolgt eine Prädiktion und Anzeige der Landezone während des Landeanflugs auf der Basis eingeführter Lande-Anflugsprozeduren. Das erfindungsgemäße Verfahren erfordert somit die Anwendung/Einhaltung dieser Prozeduren.

Bevorzugt wird das erfindungsgemäße Verfahren neben dem allein maßgeblichen Primary Flight Display als zusätzliches Mittel zur Orientierung für den Piloten vorgesehen, welches er während der kritischen Landephase als Positionsreferenz (Darstellung der aktuellen Position bezogen auf die Landezone) nutzen kann. In dieser Rolle als zusätzliche Landehilfe neben dem für DAL-A (Design Assurance Level) zugelassenen Primary Flight Display wird für den Betrieb des erfindungsgemäßen Systems nur eine vereinfachte behördliche Flugzulassung benötigt. Um einen permanenten Blickkontakt des Piloten zur erfindungsgemäßen Anzeige zu vermeiden, ist die Darstellung der relevanten Informationen extrem reduziert und beschränkt sich in der bevorzugten Ausführung ausschließlich auf folgende Elemente:
- Darstellung eines Symbols für die Position der auf der Basis einer vorgeschriebenen Landeprozedur berechneten Landezone sowie relativ und positionsgerecht hierzu eines Symbols der momentanen Position des Helikopters,
- Darstellung der momentanen Höhe des Helikopters als Radius eines Kreises, dessen Mittelpunkt von dem Symbol für die momentane Position des Helikopters gebildet wird.

Auf die Anzeige schnell sich ändernder Informationen wie Beschleunigungen, Geschwindigkeiten oder Fluglage wird in dieser Ausführung bewusst verzichtet, da derartige Informationen bereits über das Primary Flight Display zur Verfügung stehen.

Die Erfindung wird anhand eines Ausführungsbeispiels unter Bezugnahme auf Figuren näher erläutert. Es zeigen:
- Fig. 1: die erfindungsgemäße Anzeige sowie die Prädiktion der Landezone während des Landeanflugs;
- Fig. 2: die erfindungsgemäße Anzeige in mehreren Momentaufnahmen während der finalen Anflugphase;
- Fig. 3: die erfindungsgemäße Anzeige bei nicht optimalem Anflug der Landezone;
- Fig. 4: eine vorteilhafte Ausführung der erfindungsgemäßen Anzeige;
- Fig. 5: das Blockschaltbild eines Systems zur Durchführung des erfindungsgemäßen Verfahrens;
- Fig. 6: die Darstellung eines Cockpits mit der erfindungsgemäßen Anzeige.

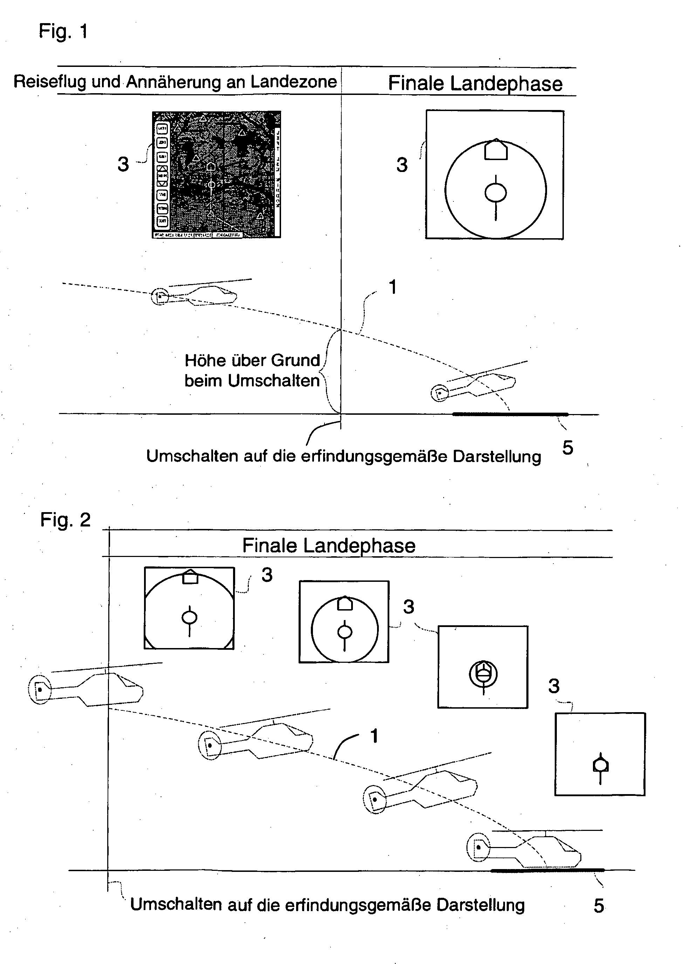

Fig. 1 zeigt eine Prinzipdarstellung zum Ablauf des erfindungsgemäßen Verfahrens. Der Landeanflug des Helikopters erfolgt auf der Landetrajektorie 1 entsprechend einer dem Piloten vorgegebenen Landeprozedur. Dabei handelt es sich typischerweise um eine Standardlandeprozedur, die höchstmögliche Sicherheit im Flugbetrieb gewährleisten soll.

Im Reiseflug und zu Beginn des Landeanflugs auf die Landezone 5 hin erfolgt mit der Anzeige 3 noch eine herkömmliche Kartendarstellung in elektronischer Form, z.B. eine an sich bekannte "Moving Map Darstellung" zur Flugnavigation und Orientierung. Diese ist jedoch aufgrund ihrer groben Auflösung zur Orientierung für die weitere Landung ungeeignet. Mit Beginn der finalen Landephase wird diese herkömmliche Kartendarstellung durch die erfindungsgemäße Darstellung ersetzt.

Unter Berücksichtigung der Landeprozedur (Landetrajektorie 1), der Höhe über Grund, der Sink-Rate und des Geschwindigkeitsvektors des Helikopters wird der Umschaltpunkt für die Kartenanzeige automatisch bestimmt und darüber hinaus die zugehörige Landezone berechnet. Die Umschaltung muss in jedem Fall so frühzeitig erfolgen, dass kritische Situationen wie Brown-Out oder White-Out noch nicht eintreten können.

Die berechnete Landezone 5 (das erfindungsgemäße Verfahren setzt die Existenz einer für die Landung geeignete Landezone voraus, d.h. insbesondere hinsichtlich Neigung, Größe, Hindernisfreiheit) wird in der erfindungsgemäßen Darstellung auf der Anzeige 3 wiedergegeben, im gezeigten Beispiel ein Symbol, das an ein abstrahiertes Gebäude erinnert (um damit Assoziationen an einen Hangar bzw. eine Parkposition zu erzeugen).

Des Weiteren ist in der Anzeige ein Symbol für die momentane Position des Helikopters im Bezug zu der berechneten Landezone wiedergegeben. Im weiteren Verlauf der Landung wird zur Berechnung der Helikopter-Position in Relation zur Landezone ein Inertial-Navigationssystem sowie ein Höhensensor verwendet.

Zur räumlichen Orientierung des Piloten ist um das Helikopter-Symbol ein Kreis dargestellt, dessen Radius der momentanen Höhe des Helikopters über dem Boden entspricht. In der gezeigten Darstellung bleibt das Helikoptersymbol in der Anzeige unbeweglich, während sich die Position der Landezone zusammen mit dem Höhenkreis verändert. Die alternative Darstellung mit einer festen Landezone und einem veränderlichen Helikoptersymbol ist aber äquivalent und stellt ebenfalls eine Lösung im Rahmen der Erfindung dar.

Fig. 2 zeigt die erfindungsgemäße Anzeige in mehreren Momentaufnahmen während der finalen Anflugphase. Die Skalierung für die Darstellung des Höhenkreises und die Skalierung für die Darstellung des Abstands zwischen der Position der Landezone und der Position des Helikopters sind derart gewählt, dass das Symbol für die Landezone sich an seiner Spitze mit dem Höhenkreis schneidet, solange der Pilot der vorgegebenen Landetrajektorie folgt.

Bei Befolgung der vorgegebenen Landeprozedur befinden sich also die Symbole für Landezone und Helikopter (zumindest größtenteils) innerhalb des Höhenkreises, welcher fortlaufend kleiner wird, bis schließlich alle drei Symbole im Zeitpunkt der Landung miteinander verschmelzen.

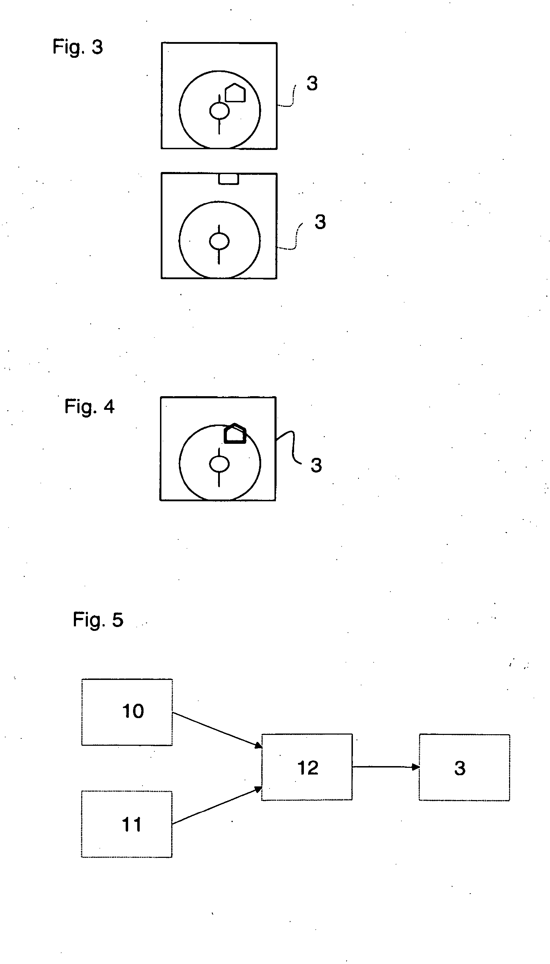

Fig. 3 zeigt die Anzeige 3 mit verschiedenen erfindungsgemäßen Darstellungen, bei denen der Helikopter nicht der vorgeschriebenen Parabel folgt. In der oberen Darstellung befindet sich der Helikopter zu weit links bezogen auf die Landezone. Außerdem fliegt der Helikopter zu hoch, da das Symbol für die Landezone vom Höhenkreis entfernt ist.

In der unteren Darstellung von Fig. 3 befindet sich der Helikopter ebenfalls links ab von der Landezone. Außerdem ist seine Höhe zu gering, da das Symbol für die Landezone außerhalb des Höhenkreises liegt.

Fig. 4 zeigt eine vorteilhafte Ausführung der erfindungsgemäßen Darstellung. Üblicherweise vergehen zwischen Umschaltpunkt und Landung nur wenige Sekunden. Sollte sich dieser Zeitraum jedoch verlängern, weil der Helikopter z.B. über der Landezone schwebt, kann es (je nach Genauigkeit des Navigationssystems) zu einer zunehmenden Ungenauigkeit der vom Inertial-Navigationssystem berechneten Position kommen. Diese Ungenauigkeit wird durch eine zunehmende Strich-Stärke des Symbols für die Landezone berücksichtigt, wie in Fig. 4 dargestellt.

Fig. 5 zeigt den Aufbau eines Systems zur Implementierung des beschriebenen Verfahrens.

Der Computer 12 berechnet zunächst den Umschalt-Zeitpunkt für die erfindungsgemäße Darstellung auf der Anzeige 3 mittels Geschwindigkeit(-Vektor) (die Bereitstellung dieser Daten erfolgt durch das Inertial-Navigationssystem 10) und ggf. weiteren Parametern sowie der Höhe über Grund (bereitgestellt durch den Höhenmesser 11).

Im weiteren Verlauf der Landung wird das Navigationssystem 10 sowohl zur Berechnung der Lage der Landezone als auch zur Berechnung des Höhenkreises genutzt. Alternativ oder zusätzlich kann der Höhenmesser 11 für die Berechnung des Höhenkreises genutzt werden.

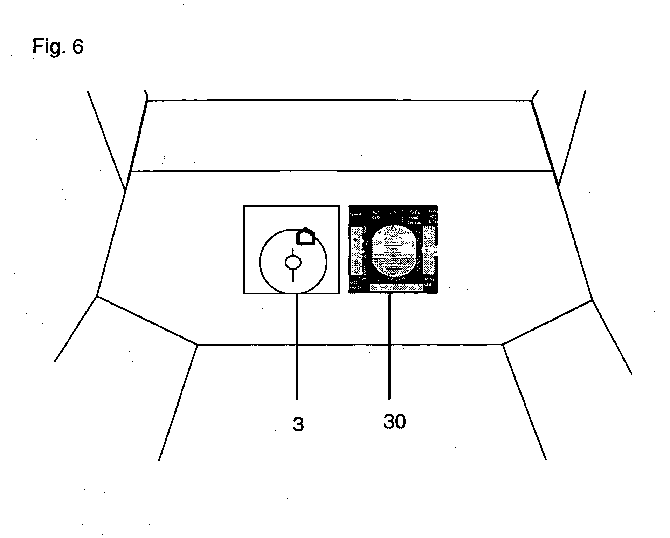

Fig. 6 zeigt das Cockpit eines Helikopters, in dem das erfindungsgemäße Verfahren implementiert ist. Die Anzeige 3 für die erfindungsgemäße Darstellung ist zentral, direkt neben dem Primary Flight Display 30 angeordnet, welches für die Darstellung aller wesentlichen Flugparameter wie Beschleunigung, Geschwindigkeiten und Fluglage eingerichtet und zertifiziert ist. Die erfindungsgemäße Anzeige 3 dient als zusätzliches Hilfsmittel für den Piloten zur besseren Orientierung in der finalen Landephase. Die dargestellten Informationen sind auf die oben beschriebenen Elemente beschränkt, um eine Überlastung und Ablenkung der Piloten zu vermeiden.

Im Folgenden werden nochmals die wesentlichen Vorteile der Erfindung zusammengefasst:

Es handelt sich um ein intuitives, kostengünstiges und schnell implementierbares Konzept zur Unterstützung von Landungen bei schlechter Sicht (z.B. Staublandung, Schneelandung, Nacht). Besondere Vorteile sind:
- Einfache Helikopter Ein- und Nachrüstung (in der Regel über eine SW-Erweiterung) durch Nutzung bereits vorhandener Komponenten;
- Einfache Zulassung des Systems:
   - Das erfindungsgemäße System kann vorteilhaft als ein unterstützendes System (insbesondere neben dem Primary Flight Display) vorgesehen sein; bereits zugelassene (prozedurale) Landeverfahren gelten unverändert;
   - geringe Komplexität der Berechnungen und Visualisierung;
   - vereinfachte symbolische Darstellung der Helikopter und Lande-Zonen Position, ohne Anzeige genauer Messwerte sowie ohne Einbeziehung dynamischer Kenngrößen (Geschwindigkeiten, Beschleunigungen, etc.);
- Intuitive und logische Darstellung, da auf dem Moving Map Display unmittelbar vor der Landung automatisch die erfindungsgemäße Symbolik dargestellt wird.

## Patentansprüche

1. Verfahren zur Landehilfe für einen Helikopter, mit folgenden Verfahrensschritten:
- Berechnung der voraussichtlichen Landezone (5) auf der Basis einer vorgegebenen Landetrajektorie (1),
- in einer Anzeige (3): Darstellung eines Symbols für die Position der Landezone (5) sowie relativ hierzu eines Symbols der momentanen Position des Helikopters, **gekennzeichnet durch** den folgenden Verfahrensschritt:
- Darstellung der momentanen Höhe des Helikopters als Radius eines Kreises, dessen Mittelpunkt von dem Symbol für die momentane Position des Helikopters gebildet wird.

2. Verfahren nach Anspruch 1, **dadurch gekennzeichnet, dass** die Darstellung des Symbols für die Position der Landezone (5) sowie relativ hierzu des Symbols der momentanen Position des Helikopters mit Bezug auf ein helikopterfestes Koordinatensystem dargestellt wird.

3. Verfahren zur Landehilfe nach Anspruch 2, **dadurch gekennzeichnet, dass** auf der Anzeige (3) die Skalierung für die Darstellung des Höhenkreises und die Skalierung für die Darstellung des Abstands zwischen der Position der Landezone (5) und der Position des Helikopters derart gewählt werden, dass der Helikopter der vorgegebenen Landetrajektorie (1) folgt, solange das Symbol für die Landezone (5) sich am Höhenkreis befindet oder diesen schneidet.

4. Verfahren zur Landehilfe nach einem der vorangehenden Ansprüche, **dadurch gekennzeichnet, dass** die Strichstärke des Symbols für die Position der Landezone erhöht wird, wenn der Landeanflug eine vorgegebene Zeitdauer überschreitet.

5. Verfahren zur Landehilfe nach einem der vorangehenden Ansprüche, **dadurch gekennzeichnet, dass** die Landetrajektorie (1) eine hinsichtlich Flugsicherheit optimierte Trajektorie ist.

6. System zur Landehilfe für einen Helikopter,
- mit einem Computer (12) zur Berechnung der voraussichtlichen Landezone auf der Basis einer vorgegebenen Landetrajektorie (1),
- einem Navigationssystem (10) zur Ermittlung der momentanen Position und der momentanen Höhe des Helikopters,
- einer Anzeige (3), eingerichtet zur Darstellung eines Symbols für die Position der Landezone und relativ hierzu eines Symbols der momentanen Position des Helikopters **dadurch gekennzeichnet, dass** die Anzeige eingerichtet ist zur Darstellung der momentanen Höhe des Helikopters als Radius eines Kreises, dessen Mittelpunkt von dem Symbol für die momentane Position des Helikopters gebildet wird.

7. System nach Anspruch 6, **dadurch gekennzeichnet, dass** die Darstellung des Symbols für die Position der Landezone (5) sowie relativ hierzu des Symbols der momentanen Position des Helikopters mit Bezug auf ein helikopterfestes Koordinatensystem dargestellt wird.

8. System nach Anspruch 7, **dadurch gekennzeichnet, dass** in der Anzeige (3) die Skalierung für die Darstellung des Höhenkreises und die Skalierung für die Darstellung des Abstands zwischen der Position der Landezone (5) und der Position des Helikopters derart eingestellt ist, dass der Helikopter der vorgegebenen Landetrajektorie (5) folgt, solange das Symbol für die Landezone (5) sich am Höhenkreis befindet oder diesen schneidet.

9. System nach einem der Ansprüche 6 bis 8, umfassend einen Höhenmesser (11), der anstatt oder zusätzlich zu dem Navigationssystem die momentane Position des Helikopters ermittelt.

## Claims

1. Method for landing assistance for a helicopter, having the following method steps:
- calculating the expected landing zone (5) on the basis of a prescribed landing trajectory (1),
- in a display (3): displaying a symbol for the position of the landing zone (5) and, in relation hereto, displaying a symbol of the instantaneous position of the helicopter,
**characterized by** the following method step:
- displaying the instantaneous height of the helicopter as the radius of a circle whose centre is formed by the symbol for the instantaneous position of the helicopter.

2. Method according to Claim 1, **characterized in that** the symbol for the position of the landing zone (5) and, in relation hereto, the symbol of the instantaneous position of the helicopter are displayed with reference to a helicopter-fixed coordinate system.

3. Method for landing assistance according to Claim 2, **characterized in that** the scaling for the display of the height circle and the scaling for the display of the distance between the position of the landing zone (5) and the position of the helicopter are selected on the display (3) in such a way that the helicopter follows the prescribed landing trajectory (1) as long as the symbol for the landing zone (5) is located on the height circle or intersects the latter.

4. Method for landing assistance according to one of the preceding claims, **characterized in that** the stroke width of the symbol for the position of the landing zone is increased when the approach flight exceeds a prescribed time period.

5. Method for landing assistance according to one of the preceding claims, **characterized in that** the landing trajectory (1) is a trajectory optimized with regard to flight safety.

6. System for landing assistance for a helicopter,
- having a computer (12) for calculating the expected landing zone on the basis of a prescribed landing trajectory (1),
- a navigation system (10) for determining the instantaneous position and the instantaneous height of the helicopter,
- a display (3), set up to display a symbol for the position of the landing zone and, in relation hereto, display a symbol of the instantaneous position of the helicopter, **characterized in that** the display is set up to display the instantaneous height of the helicopter as the radius of a circle whose centre is formed by the symbol for the instantaneous position of the helicopter.

7. System according to Claim 6, **characterized in that** the symbol for the position of the landing zone (5) and, in relation hereto, the symbol of the instantaneous position of the helicopter are displayed with reference to a helicopter-fixed coordinate system.

8. System according to Claim 7, **characterized in that** the scaling for the display of the height circle and the scaling for the display of the distance between the position of the landing zone (5) and the position of the helicopter are set up in the display (3) in such a way that the helicopter follows the prescribed landing trajectory (1) as long as the symbol for the landing zone (5) is located on the height circle or intersects the latter.

9. System according to one of Claims 6 to 8, comprising an altimeter (11) which is used to determine the instantaneous position of the helicopter instead of, or in addition to, the navigation system.

## Revendications

1. Procédé d'aide à l'atterrissage pour un hélicoptère, comprenant les étapes de procédé suivantes :
- calcul de la zone d'atterrissage (5) estimée en se basant sur une trajectoire d'atterrissage (1) prédéfinie,
- dans un afficheur (3) : représentation d'un symbole pour la position de la zone d'atterrissage (5) ainsi que d'un symbole de la position momentanée de l'hélicoptère relativement à celle-ci, **caractérisé par** l'étape de procédé suivante :
- représentation de l'altitude momentanée de l'hélicoptère sous la forme d'un rayon d'un cercle dont le centre est formé par le symbole de la position momentanée de l'hélicoptère.

2. Procédé selon la revendication 1, **caractérisé en ce que** la représentation du symbole pour la position de la zone d'atterrissage (5) ainsi que du symbole de la position momentanée de l'hélicoptère relativement à celle-ci est réalisée en référence à un système de coordonnées fixe de l'hélicoptère.

3. Procédé d'aide à l'atterrissage selon la revendication 2, **caractérisé en ce que** l'échelle pour la représentation du cercle d'altitude et l'échelle pour la représentation de l'écart entre la position de la zone d'atterrissage (5) et la position de l'hélicoptère sont sélectionnées sur l'afficheur (3) de telle sorte que l'hélicoptère suit la trajectoire d'atterrissage (1) prédéfinie tant que le symbole de la zone d'atterrissage (5) se trouve sur le cercle d'altitude ou croise celui-ci.

4. Procédé d'aide à l'atterrissage selon l'une des revendications précédentes, **caractérisé en ce que** l'épaisseur de trait du symbole pour la position de la zone d'atterrissage est augmentée lorsque l'approche d'atterrissage dépasse une durée prédéfinie.

5. Procédé d'aide à l'atterrissage selon l'une des revendications précédentes, **caractérisé en ce que** la trajectoire d'atterrissage (1) est une trajectoire optimisée du point de vue de la sécurité du vol.

6. Système d'aide à l'atterrissage pour un hélicoptère, comprenant :
- un ordinateur (12) pour calculer la zone d'atterrissage estimée en se basant sur une trajectoire d'atterrissage (1) prédéfinie,
- un système de navigation (10) pour déterminer la position momentanée et l'altitude momentanée de l'hélicoptère,
- un afficheur (3), configuré pour représenter un symbole pour la position de la zone d'atterrissage et un symbole de la position momentanée de l'hélicoptère relativement à celle-ci, **caractérisé en ce que** l'afficheur est configuré pour représenter l'altitude momentanée de l'hélicoptère sous la forme d'un rayon d'un cercle dont le centre est formé par le symbole de la position momentanée de l'hélicoptère.

7. Système selon la revendication 6, **caractérisé en ce que** la représentation du symbole pour la position de la zone d'atterrissage (5) ainsi que du symbole de la position momentanée de l'hélicoptère relativement à celle-ci est réalisée en référence à un système de coordonnées fixe de l'hélicoptère.

8. Système selon la revendication 7, **caractérisé en ce que** l'échelle pour la représentation du cercle d'altitude et l'échelle pour la représentation de l'écart entre la position de la zone d'atterrissage (5) et la position de l'hélicoptère sont réglées sur l'afficheur (3) de telle sorte que l'hélicoptère suit la trajectoire d'atterrissage (1) prédéfinie tant que le symbole de la zone d'atterrissage (5) se trouve sur le cercle d'altitude ou croise celui-ci.

9. Système selon l'une des revendications 6 à 8, comprenant un altimètre (11) qui détermine la position momentanée de l'hélicoptère à la place ou en complément du système de navigation.
